(19) Europäisches Patentamt
European Patent Office
Office européen des brevets

(11) **EP 3 648 361 A1**

(12) **EUROPEAN PATENT APPLICATION**
published in accordance with Art. 153(4) EPC

(43) Date of publication:
**06.05.2020 Bulletin 2020/19**

(51) Int Cl.:
***H04B 1/7097*** (2011.01)   ***H04L 27/00*** (2006.01)
***H04J 11/00*** (2006.01)   ***H04W 72/00*** (2009.01)

(21) Application number: **18823516.2**

(22) Date of filing: **25.06.2018**

(86) International application number:
**PCT/CN2018/092540**

(87) International publication number:
**WO 2019/001374 (03.01.2019 Gazette 2019/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2017 CN 201710523258**

(71) Applicant: **Sony Corporation**
**Tokyo 108-0075 (JP)**

(72) Inventors:
• **LIU, Hao**
**Nanjing**
**Jiangsu 211111 (CN)**
• **XU, Pingping**
**Nanjing**
**Jiangsu 211111 (CN)**
• **SHENG, Bin**
**Nanjing**
**Jiangsu 211111 (CN)**
• **ZHANG, Wenbo**
**Beijing 100028 (CN)**
• **LV, Pen-Shun**
**Beijing 100028 (CN)**

(74) Representative: **D Young & Co LLP**
**120 Holborn**
**London EC1N 2DY (GB)**

(54) **ELECTRONIC DEVICE AND METHOD FOR WIRELESS COMMUNICATIONS**

(57)   The present disclosure provides an electronic device and a method for wireless communications. The electronic device comprises a processing circuit. The processing circuit is configured to: for each candidate resource block, obtain a first receiving signal for a pilot symbol that is measured by the base station in a condition in which a D2D communication group does not perform D2D communication; receive obtaining a second receiving signal for a pilot symbol that is measured by the corresponding cellular user equipment in a condition in which the D2D communication group performs D2D communication; remove the impact of the first receiving signal from the second receiving signal, to serve as an interference signal received by the cellular user equipment from a D2D transmission device of the D2D communication group; and determine a priority order of resource blocks available to the D2D communication group by using interference minimization as an optimization objective.

Figure 6

**Description**

The present application claims priority to Chinese Patent Application No. 201710523258.3, titled "ELECTRONIC DEVICE AND METHOD FOR WIRELESS COMMUNICATIONS", filed on June 30, 2017 with the China National Intellectual Property Administration, which is incorporated herein by reference in its entirety.

**FIELD**

The present disclosure generally relates to the technical field of wireless communications, in particular to resource allocation for device to device (D2D) communication, and in more particular to an electronic apparatus and method for wireless communications.

**BACKGROUND**

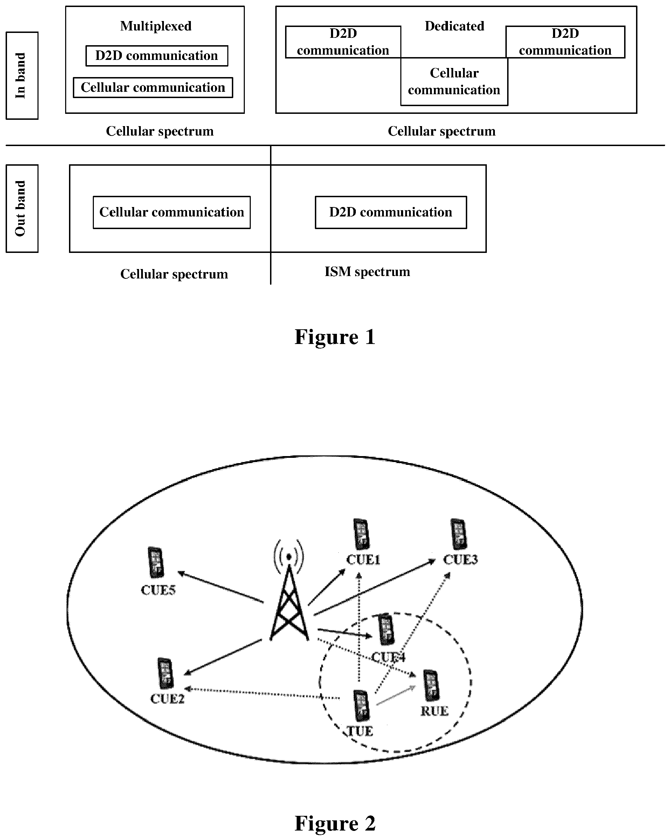

D2D communication is a communication manner for performing direct communication between user terminals without via a base station or other core networks, and is one of critical technologies for 5G wireless communications. According to a frequency band used by the D2D communication, the D2D communication may be classified into in-band D2D communication and out-band D2D communication, as shown in Figure 1. Specifically, the out-band D2D communication uses spectrum resources on an unlicensed frequency band, such as spectrum on the Industrial Scientific Medical (ISM) frequency band, and the in-band D2D communication uses spectrum resources on a licensed frequency band, which has an advantage of being controlled conveniently. The in-band D2D communication may be classified into D2D communication in a multiplexing mode (Underlay D2D) and D2D communication in a dedicated mode (Overlay D2D). Specifically, the D2D communication in the multiplexing mode shares resources with other cellular users, thereby achieving higher spectrum utilization efficiency, while the D2D communication in the dedicated mode uses resources allocated by the system exclusively for it. The D2D communication in the multiplexing mode may be further classified into D2D communication of multiplexing uplink resources and D2D communication of multiplexing downlink resources.

Compared with conventional cellular networks, the D2D user may multiplex spectrum resources of a cellular user, such that a higher data transmission rate, resource utilization efficiency, network capacity and energy efficiency can be achieved. However, the D2D communication in the multiplexing mode may incur more complex electromagnetic interference conditions.

**SUMMARY**

In the following, an overview of the present disclosure is given simply to provide basic understanding to some aspects of the present disclosure. It should be understood that this overview is not an exhaustive overview of the present disclosure. It is not intended to determine a critical part or an important part of the present disclosure, nor to limit the scope of the present disclosure. An object of the overview is only to give some concepts in a simplified manner, which serves as a preface of a more detailed description described later.

According to an aspect of the present disclosure, an electronic apparatus for wireless communications is provided, which includes processing circuitry configured to: for each candidate resource block, acquire a first receiving signal measured by a respective cellular user equipment with respect to a pilot symbol transmitted by a base station on the candidate resource block in a state that a D2D communication group does not perform D2D communication, and a second receiving signal measured by the respective cellular user equipment with respect to the pilot symbol in a state that the D2D communication group performs D2D communication, respectively; remove an impact of the first receiving signal from the second receiving signal, to be used as an interference signal received by the cellular user equipment from a D2D emitting device of the D2D communication group; and determine a priority order for resource blocks available to the D2D communication group by taking minimization of the interferences as an optimization objective.

According to another aspect of the present disclosure, a method for wireless communications is provided, which includes: for each candidate resource block, acquiring a first receiving signal measured by a respective cellular user equipment with respect to a pilot symbol transmitted by a base station on the candidate resource block in a state that a D2D communication group does not perform D2D communication, and a second receiving signal measured by the respective cellular user equipment with respect to the pilot symbol in a state that the D2D communication group performs D2D communication, respectively; removing an impact of the first receiving signal from the second receiving signal, to be used as an interference signal received by the cellular user equipment from a D2D emitting device of the D2D communication group; and determining a priority order for resource blocks available to the D2D communication group by taking minimization of the interferences as an optimization objective.

According to an aspect of the present disclosure, an electronic apparatus for wireless communications is provided, which includes: a receiving unit, configured to receive, from a base station, an instruction to perform temporary D2D communication; and a transmitting unit, configured to transmit a pilot symbol on a candidate resource block.

According to another aspect of the present disclosure, a method for wireless communications is provided, which includes: receiving, from a base station, an instruction to perform temporary D2D communication; and transmitting a pilot symbol on a candidate resource block.

According to other aspects of the present disclosure, computer program codes and computer program products for implementing the above methods as well as computer readable storage medium on which computer program codes for implementing the above methods are recorded are further provided.

With the electronic apparatus and method according to the present disclosure, interferences of D2D communication to a cellular user equipment are acquired by determining a difference between a receiving signal of the cellular user equipment with respect to a pilot symbol in a state that the D2D communication is not performed and a receiving signal of the cellular user equipment with respect to the pilot symbol in a state that the D2D communication is performed, such that resource allocation for D2D communication can be optimized based on the interferences, thereby improving utilization efficiency of the transmission resources.

These and other advantages of the present disclosure will be more apparent by illustrating in detail a preferred embodiment of the present disclosure in conjunction with accompanying drawings below.

## BRIEF DESCRIPTION OF THE DRAWINGS

To further set forth the above and other advantages and features of the present disclosure, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present disclosure and should not be construed as a limitation to the scope of the disclosure. In the accompanying drawings:

Figure 1 is a schematic diagram showing classifications of the D2D communication;

Figure 2 shows an example of a scenario in which the D2D communication multiplexes downlink resources for cellular communication;

Figure 3 is a schematic diagram showing a basic flow of resource allocation for a D2D user;

Figure 4 shows another example of the scenario in which the D2D communication multiplexes downlink resources for cellular communication;

Figure 5 shows an example of a structure of an LTE downlink resource block;

Figure 6 is a block diagram showing functional modules of an electronic apparatus for wireless communications according to an embodiment of the present disclosure;

Figure 7 is a block diagram showing functional modules of an electronic apparatus for wireless communications according to another embodiment of the present disclosure;

Figure 8 is a schematic diagram showing a pilot multiplexing manner among multiple D2D emitting devices;

Figure 9 shows an example of a resource link table;

Figure 10 shows another example of the resource link table;

Figure 11 is a schematic diagram showing an information procedure between the base station and the user equipment;

Figure 12 is a block diagram showing functional modules of an electronic apparatus for wireless communications according to another embodiment of the present disclosure;

Figure 13 is a flowchart showing a method for wireless communications according to an embodiment of the present disclosure;

Figure 14 is a flowchart showing a method for wireless communications according to another embodiment of the present disclosure;

Figure 15 is a block diagram illustrating a first example of a schematic configuration of an eNB to which the technology of the present disclosure may be applied;

Figure 16 is a block diagram illustrating a second example of a schematic configuration of an eNB to which the technology of the present disclosure may be applied;

Figure 17 is a block diagram illustrating an example of a schematic configuration of a smart phone to which the technology of the present disclosure may be applied;

Figure 18 is a block diagram illustrating an example of a schematic configuration of an car navigation device to which the technology of the present disclosure may be applied; and

Figure 19 is a block diagram of an exemplary block diagram illustrating the structure of a general purpose personal computer capable of realizing the method and/or device and/or system according to the embodiments of the present disclosure.

## DETAILED DESCRIPTION OF THE EMBODIMENTS

An exemplary embodiment of the present disclosure will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a business, and these constraints may change as the embodiments differs. Furthermore, it should also be understood that although the development work may be very complicated and time-consuming, for those skilled in the art benefiting from the present disclosure, such development work is only a routine task.
Here, it should also be noted that in order to avoid obscuring the present disclosure due to unnecessary details, only a device structure and/or processing steps closely related to the solution according to the present disclosure are illustrated in the accompanying drawing, and other details having little relationship to the present disclosure are omitted.

<First embodiment

Figure 2 shows an example of a scenario in which the D2D communication multiplexes downlink resources for cellular communication. Hereinafter, the scenario in which the D2D communication multiplexes downlink resources is described. However, it should be understood that this is not limitative, and the technique may be suitably applied to other scenarios as well.
In Figure 2, CUE represents a cellular user equipment, TUE represents an emitting device for D2D communication, RUE represents a receiving device for D2D communication, a dashed line in Figure 2 represents interferences of the D2D communication to the CUE, and solid lines respectively represents a downlink of a cellular user equipment and a D2D link. Different optimization objectives may be set for resource allocation for a D2D user according to actual requirements, such as maximizing the system throughput, minimizing system interferences, minimizing a system power, and maximizing the spectrum utilization efficiency. It should be understood that although a D2D communication group is shown in a one-to-one manner in Figure 2, the present disclosure is not limited thereto, and the D2D communication group may also be in a one-to-multiple form, that is, there are multiple RUEs, to which the technique of the present disclosure may also be applied.

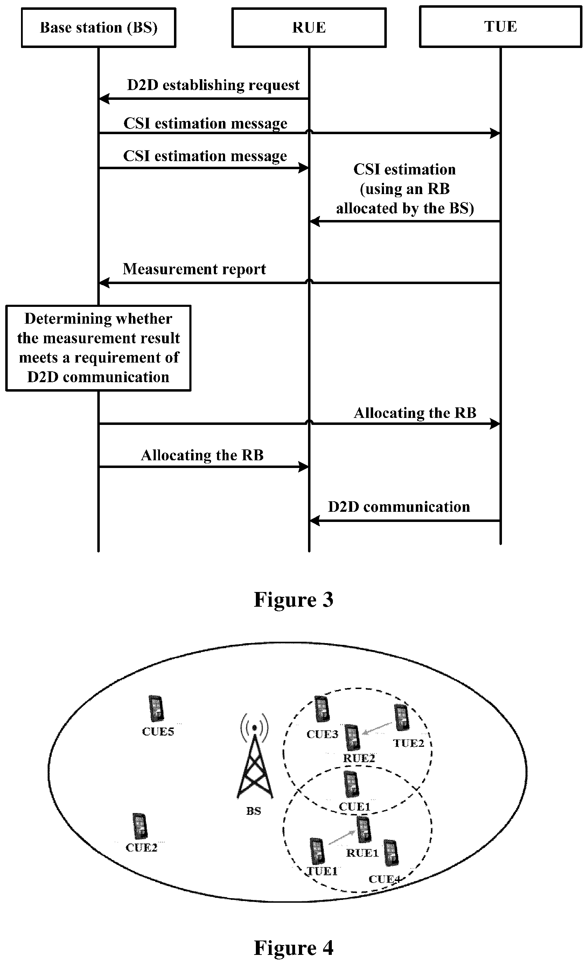

Figure 3 is a schematic diagram showing a basic flow of resource allocation for a D2D user. First, an RUE transmits a D2D establishing request to a base station (BS), and the BS transmits a channel status information (CSI) estimation message to the TUE and the RUE in response to the request, so that the TUE and the RUE performs CSI estimation for the resource block (RB) allocated by the BS. Then, the TUE transmits the CSI measurement result to the BS, and the BS determines whether the measurement result can meet a requirement of the D2D communication, and allocates the corresponding RB to the TUE and the RUE in a case that the measurement result can meet the requirement of the D2D communication. The TUE and the RUE perform D2D communication using the RB.
The BS may allocate resources for the D2D user with a random resource allocation method, that is, the BS randomly allocates the resources of the cellular user to the D2D user for communication. However, the improvement to the system performance caused by this allocation method is limited, and there is a certain probability that the D2D user is allocated with resources of cellular user equipment which is close to the D2D user, incurring notable multiplexing interferences and lowering communication quality. In the embodiments hereinafter, an electronic apparatus and method for optimizing resource allocation for D2D communication is provided.

For ease of description, Figure 4 shows another example of the scenario in which the D2D communication multiplexes downlink resources for cellular communication. Figure 4 shows a cell of a cellular network, where BS is a base station, and the cell has nine UEs, which include five cellular user equipment, that is, CUE1, CUE2, ..., and CUE5, and four D2D user equipment (that is, two D2D communication groups), that is, TUE1, RUE1, TUE2, and RUE2. Since orthogonal frequency division multiple access (OFDMA) is a commonly used radio technology, the description herein is made by taking the OFDMA as an example. However, it should be understood that the technique of the present disclosure may also be applied to other radio technologies using the orthogonal access, such as time division multiple access (TDMA), frequency division multiple access (FDMA), and code division multiple access (CDMA).

In Figure 4, the cellular user equipment directly communicates with the base station, the TUE1 and the RUE1 form a D2D communication group 1, and the TUE2 and the RUE2 form a D2D communication group 2. The base station allocates orthogonal subcarriers for each CUE by using, for example, LTE resource blocks (RBs), to perform communication. The D2D communication group 1 and the D2D communication group 2 multiplex the downlink transmission resources allocated to CUE, that is, when performing D2D communication, the TUE1 and the TUE2 transmit data information to RUE1 and RUE2, respectively, on a downlink in a manner of multiplexing resource blocks of the cellular user.

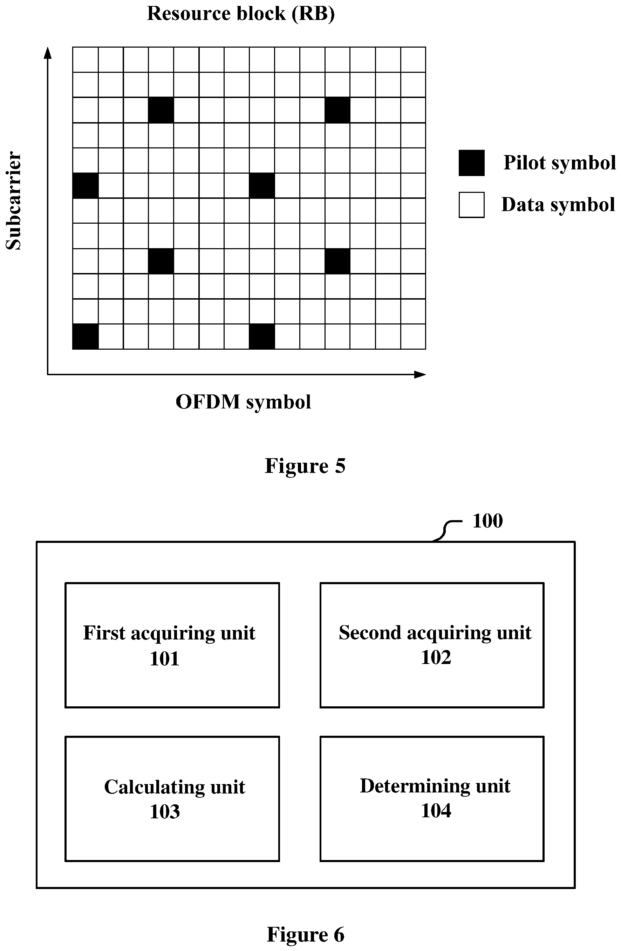

Figure 5 shows an example of a structure of an LTE downlink resource block, where each resource block includes multiple OFDM symbols in a time domain and multiple subcarriers in a frequency domain. Each small grid in Figure 5 represents a resource element (RE), which is the smallest unit of available physical resources. A black-filled resource element indicates a location where a pilot symbol is located, and a blank resource element indicates a location where a data symbol is located. In this embodiment, the pilot symbol is used for performing measurement of the channel status.

Figure 6 is a block diagram showing functional modules of an electronic apparatus 100 for wireless communications according to an embodiment of the present disclosure. The electronic apparatus 100 includes a first acquiring unit 101, a second acquiring unit 102, an interference calculating unit 103, and a determining unit 104. The first acquiring unit 101 is configured acquire, for each candidate resource block, a first receiving signal measured by a respective cellular user equipment with respect to a pilot symbol transmitted by a base station on the candidate resource block in a state that a D2D communication group does not perform D2D communication. The second acquiring unit 102 is configured to acquire a second receiving signal measured by the respective cellular user equipment with respect to the pilot symbol in a state that the D2D communication group performs D2D communication. The interference calculation unit 103 is configured to remove an impact of the first receiving signal from the second receiving signal, to be used as an interference signal received by the cellular user equipment from a D2D emitting device in the D2D communication group. The determining unit 104 is configured to determine a priority order for resource blocks available to the D2D communication group by taking minimization of the interferences as an optimization objective. It should be noted that the operations of the first acquiring unit 101 and the second acquiring unit 102 do not have a limitation in order, and an order of performing the measurement of the first receiving signal and the measurement of the second receiving signal is also not limited. In other words, the first receiving signal may be measured and acquired first, or the second receiving signal may be measured and acquired first. In addition, the first acquiring unit 101 and the second acquiring unit 102 may also be the same acquiring unit, and they are distinguished here only for convenience and clarity of description.

The first acquiring unit 101, the second acquiring unit 102, the interference calculating unit 103 and the determining unit 104 may be implemented by, for example, one or more processing circuitries, and the processing circuitry may be implemented as, for example, a chip. The electronic apparatus 100 may be, for example, located on the BS shown in Figure 3, or communicatively connected to the BS. Moreover, the various components of the electronic apparatus 100 may also be suitably distributed at different locations of a wireless communication network, which is not limited herein.

In order to calculate the interferences of the D2D communication group to the cellular user equipment using the same resource block, firstly, the first acquiring unit 101 and the second acquiring unit 102 respectively acquire a measurement result of channel measurement performed by a cellular communication device on the candidate resource block allocated to the cellular communication device in a case that D2D communication is not performed and a measurement result of channel measurement performed by the cellular communication device on the candidate resource block allocated to the cellular communication device in a case that D2D communication is performed, and a difference between the two measurement results represents the interferences of D2D communication to the cellular user equipment.

Specifically, in the case that the D2D communication group does not perform the D2D communication, that is, the TUE and the RUE are in a power-on state and are in communication with the base station while do not perform the D2D communication, the base station transmits a pilot symbol, for example, transmitting CSI estimation signaling to the cellular user equipment CUE on a corresponding candidate resource block. Correspondingly, the CUE measures the received pilot symbol transmitted on the corresponding candidate resource block to obtain the first receiving signal.

Taking a receiving signal of $CUE_k$ with respect to a pilot symbol on the m-th resource block $RB_m$ as an example, the first receiving signal may be expressed as follows:

$$Y_{CUE_k}^m = H_{BS,CUE_k}^m \cdot X_{BS,CUE_k}^m + N_{CUE_k}^m \qquad (1)$$

where $Y_{CUE_k}^m$ indicates the first receiving signal, that is, a signal received by the $CUE_k$ from the base station at a pilot position in the m-th resource block $RB_m$, $H_{BS,CUE_k}^m$ indicates a channel frequency response (CFR) between the base station and the $CUE_k$ on the $RB_m$, which may be estimated by various channel estimation algorithms, and the estimation result is expressed by $\hat{H}_{BS,CUE_k}^m$. $X_{BS,CUE_k}^m$ indicates a pilot symbol transmitted from the base station, and $N_{CUE_k}^m$ indicates additive white Gaussian noise (AWGN). It should be noted that in the equations herein, the same symbol represents the same meaning unless otherwise stated, which is not explained again when repeated.

Further, in the case that the D2D communication group performs D2D communication, the base station transmits the pilot symbol, for example, the CSI estimation signaling, to the cellular user equipment CUE and the D2D user RUE on the corresponding candidate resource block. In this case, the second receiving signal measured by the CUE with respect to the pilot symbol may include a useful signal from the base station and multiplexing interferences from the TUE.

Still taking the case that the D2D communication group 1 multiplexes the resource block $RB_m$ of the cellular user equipment $CUE_k$ as an example, the second receiving signal may be expressed as follows:

$$Y'^m_{CUE_k} = H_{BS,CUE_k}^m \cdot X_{BS,CUE_k}^m + H_{TUE1,CUE_k}^m \cdot X_{TUE1,CUE_k}^m + N'^m_{CUE_k} \qquad (2)$$

where $H_{TUE1,CUE_k}^m$ indicates CFR between the $TUE_1$ of the D2D communication group 1 and the $CUE_k$ on the m-th resource block $RB_m$, $X_{TUE1,CUE_k}^m$ indicates a known pilot symbol to be transmitted to the $CUE_k$ by the $TUE_1$. An estimated value of $H_{BS,CUE_k}^m \cdot X_{BS,CUE_k}^m$ may be obtained according to equation (1), which represents the useful signal received by the $CUE_k$. $H_{TUE1,CUE_k}^m \cdot X_{TUE1,CUE_k}^m$ indicates the multiplexing interferences produced due to the D2D communication group multiplexing resources of a cellular user. $N'^m_{CUE_k}$ indicates AWGN.

The interference calculating unit 103 removes an impact of the first signal from the second receiving signal, for example, subtracting equation (1) from equation (2), and information of interferences of D2D communication to the cellular user equipment may be acquired. The above information of interferences may be acquired for each candidate resource block. Then, the determining unit 104 may determine a priority order for resource blocks available to the D2D communication group by minimizing the interferences. For example, in the example of Figure 4, in a case that the D2D communication group 1 multiplexes the resource block $RB_2$ of the $CUE_2$, the above interferences are minimized, and the resource block $RB_2$ may be preferentially allocated to the D2D communication group 1.

In an example, the interferences may be represented by a difference between a communication capacity of the cellular user equipment in the state that the D2D communication group does not perform D2D communication and a communication capacity of the cellular user equipment in the state that the D2D communication group performs D2D communication. For example, in the state that the D2D communication group does not perform D2D communication, the communication capacity is calculated based on a signal-to-noise ratio (SNR) of the cellular user equipment on the corresponding candidate resource block. For example, the SNR of the $CUE_k$ on the m-th resource block $RB_m$ may be calculated as follows:

$$SNR_{CUE_k}^m = \frac{\left| \hat{H}_{BS,CUE_k}^m \cdot X_{BS,CUE_k}^m \right|^2}{\sigma^2_{m,CUE_k}} \qquad (3)$$

Where $\left| \hat{H}_{BS,CUE_k}^m \cdot X_{BS,CUE_k}^m \right|^2$ indicates a power of the useful signal received by the $CUE_k$, $\sigma^2_{m,CUE_k}$ indicates a power of $N_{CUE_k}^m$. The capacity of the $CUE_k$ on the m-th resource block $RB_m$ may be expressed as follows:

$$C_{CUE_k}^m = W \log_2(1 + SNR_{CUE_k}^m) \qquad (4)$$

where W represents a bandwidth of the RB.

In the state that the D2D communication group performs D2D communication, there are interferences of D2D communication to the cellular user equipment, and the communication capacity may be calculated based on the signal to interference and noise ratio (SINR) of the cellular user equipment on the corresponding candidate resource block. For example, the SINR of the $CUE_k$ on the m-th resource block $RB_m$ may be calculated as follows:

$$SINR^m_{CUE_k} = \frac{\left| \hat{H}^m_{BS,CUE_k} \cdot X^m_{BS,CUE_k} \right|^2}{\left| \hat{H}^m_{TUE1,CUE_k} \cdot X^m_{TUE1,CUE_k} \right|^2 + \sigma'^2_{m,CUE_k}} \qquad (5)$$

where $\sigma'^2_{m,CUE_k}$ indicates a power of $N'^m_{CUE_k}$. Accordingly, the capacity of the $CUE_k$ on the m-th resource block $RB_m$ may be calculated as follows:

$$C'^m_{CUE_k} = W \log_2(1 + SINR^m_{CUE_k}) \qquad (6)$$

Therefore, a difference between a capacity of the cellular user equipment $CUE_k$ in the state that the D2D communication is not performed and a capacity of the cellular user equipment $CUE_k$ in the state that the D2D communication is performed is expressed as follows:

$$DC^m_{CUE_k} = C^m_{CUE_k} - C'^m_{CUE_k} \qquad (7)$$

The determining unit 104 may rank the resource blocks according to the above mentioned capacity difference for each resource block, so that a resource block producing the minimum interferences to the cellular user equipment, that is, a resource block with the smallest capacity difference is ranked foremost, and the D2D communication group is preferentially allocated with the resource block that is ranked foremost. For example, if the D2D communication group requires two resource blocks, two resource blocks with the smallest capacity difference may be allocated to the D2D communication group, and so on.

Further, in the case of allocating resources to multiple D2D communication groups, a difference in communication capacity shown in equation (7) may be calculated for each of the D2D communication groups, and the determining unit 104 is configured to rank, for each of the D2D communication groups, its available resource blocks according to differences in communication capacity. In a case that the same available resource block is to be allocated to two or more D2D communication groups, the resource block is preferentially allocated to the D2D communication group with the smallest capacity difference.

As described above, although the state that D2D communication is not performed is described first and the state that D2D communication is performed is described later, this is not limited, and measurement in the state that the D2D communication is performed may be performed first, and then the measurement in the state that the D2D communication is not performed may be performed.

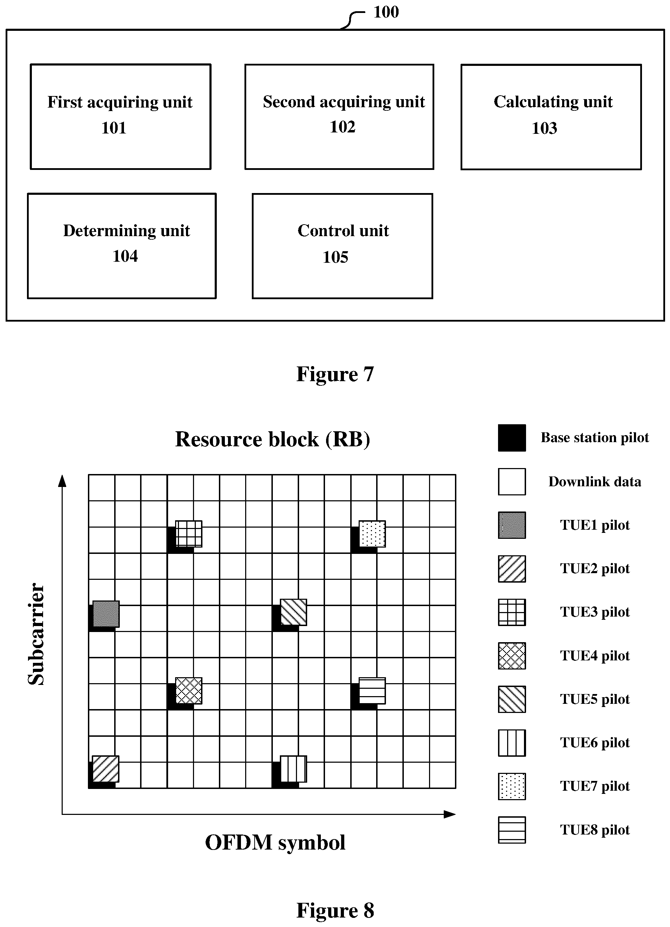

In an example, the state that the D2D communication is performed is a state that temporary D2D communication is performed. For example, as shown in Figure 7, the electronic apparatus 100 may further include a control unit 105 configured to control the base station to transmit temporary D2D communication signaling, to instruct the D2D emitting device to transmit the pilot symbol on a corresponding pilot location of the candidate resource block.

The control unit 105 may instruct multiple D2D emitting devices to transmit pilot symbols on the candidate resource block in a multiplexing manner. Figure 8 shows a multiplexing manner. In the example shown in Figure 8, the TUE1 transmits a pilot symbol on the seventh subcarrier of a first OFDM symbol on the m-th resource block, and the TUE2 transmits a pilot symbol on the first subcarrier of a first OFDM symbol on the resource block, and so on. It can be seen that in the example of the resource block shown in Figure 8, one resource block may be multiplexed by up to eight TUEs. If the number of TUEs multiplex is more than eight, for example, the TUEs may transmit the pilot symbol in a time division manner.

Although not shown in Figures 6 and 7, the electronic apparatus 100 may further include a transceiving unit, for example, configured to transmit the pilot symbol to the cellular user equipment and D2D receiving device, and receive a first receiving signal and a second receiving signal from the cellular user equipment. The transceiving unit may further be configured to transmit a temporary D2D communication instruction to a D2D emitting device. The transceiving unit may be implemented, for example, as an antenna and related circuit elements, which may be implemented, for example, as a chip.

In the above, an example of resource block allocation by taking minimization of the interferences to the cellular user equipment is described as an optimization objective, but the optimization objective is not limited thereto, for example, maximization of the D2D communication capacity together with minimization of the interferences the cellular user equipment being subjected to may also be taken as the optimization objective.

In such an example, the first acquiring unit 101 is further configured to acquire a third receiving signal measured by a D2D receiving device of the D2D communication group with respect to a pilot symbol transmitted by the base station on the corresponding candidate resource block in the state that the D2D communication group does not perform D2D communication, for example, as an interference signal of interferences of the base station to the D2D receiving device. The second acquiring unit 102 is further configured to acquire a fourth receiving signal measured by the D2D receiving device with respect to the pilot symbol in the state that the D2D communication group performs D2D communication. The calculating unit 103 is configured to remove an impact of the third receiving signal from the fourth receiving signal, to be used as an expected signal received by the D2D receiving device from the D2D emitting device. The determining unit 104 is configured to consider, while determining the a priority order for the resource blocks available to the D2D communication group by taking minimization of the interferences as the optimization objective, maximization of communication capacity of the D2D communication group.

For example, in the state that the D2D communication group does not perform D2D communication, the base station transmits the pilot symbol to the RUE of the D2D communication group and a corresponding CUE on the respective candidate resource blocks, and the RUE measures the received pilot symbol to obtain the third receiving signal. Note that the TUE is not involved in the measurement. Since the D2D communication group does not perform D2D communication, the third receiving signal measured by the RUE represents the interferences the downlink transmission of the cellular user equipment will produce to the D2D communication, in a case that the D2D communication multiplexes the resource block of the corresponding cellular user equipment. Taking a receiving signal of $RUE_1$ with respect to the pilot symbol on the m-th resource block $RB_m$ as an example, the third receiving signal may be expressed as follows:

$$Y_{RUE_1}^m = H_{BS,RUE_1}^m \cdot X_{BS,RUE_1}^m + N_{RUE_1}^m \qquad (8)$$

where $Y_{RUE_1}^m$ represents the third receiving signal, that is, a signal received by the $RUE_1$ from the base station on a pilot location in the resource block $RB_m$, $H_{BS,RUE_1}^m$ represents a CFR between the base station and the $RUE_1$ on the $RB_m$, which may be estimated by various channel estimation algorithms, where an estimation result is expressed by $\hat{H}_{BS,RUE_1}^m$. $X_{BS,RUE_1}^m$ represents a pilot symbol transmitted from the base station, and $N_{RUE_1}^m$ represents AWGN.

In the state that the D2D communication group performs D2D communication, for example, the TUE transmits a pilot symbol to the RUE at a corresponding pilot location in the candidate resource block. In addition to the useful signal (a signal which corresponds to the pilot symbol) from the TUE, the fourth receiving signal received by the RUE further includes downlink multiplexing interferences caused by the BS to the RUE when the BS transmits the pilot symbol to the cellular user equipment. Still taking the receiving signal of the $RUE_1$ with respect to the pilot symbol on the m-th resource block $RB_m$ as an example, the fourth receiving signal may be expressed as follows:

$$Y_{RUE_1}^{'m} = H_{BS,RUE_1}^m \cdot X_{BS,RUE_1}^m + H_{TUE1,RUE_1}^m \cdot X_{TUE1,RUE_1}^m + N_{RUE_1}^{'m} \qquad (9)$$

where $H_{TUE1,RUE_1}^m$ represents a CFR between the $TUE_1$ and the $RUE_1$ on the resource block $RB_m$, $X_{TUE1,RUE_1}^m$ represents a pilot symbol to be sent by the $TUE_1$ to the $RUE_1$, and correspondingly, $H_{BS,RUE_1}^m \cdot X_{BS,RUE_1}^m$ may be estimated according to the equation (8), which represents interferences caused by downlink transmission between the BS and the $CUE_k$. For $RUE_1$, $H_{TUE1,RUE_1}^m \cdot X_{TUE1,RUE_1}^m$ is the useful signal, and $N_{RUE_1}^{'m}$ is AWGN.

For example, the communication capacity of the D2D communication group may be calculated based on a signal to interference and noise ratio of the D2D receiving device on the corresponding candidate resource block. Still taking the $RUE_1$ multiplexing the resource block $RB_m$ of $CUE_k$ as an example, the SINR of the $RUE_1$ on the m-th resource block $RB_m$ is expressed by the following equation (10):

$$SINR_{RUE_1}^{m} = \frac{\left| \hat{H}_{TUE1,RUE_1}^{m} \cdot X_{TUE1,RUE_1}^{m} \right|^2}{\left| \hat{H}_{BS,RUE_1}^{m} \cdot X_{BS,RUE_1}^{m} \right|^2 + \sigma_{m,RUE_1}^{'2}} \qquad (10)$$

where $\hat{H}_{TUE1,RUE_1}^{m}$ represents an estimated value of $H_{TUE1,RUE_1}^{m}$, $\sigma_{m,RUE_1}^{'2}$ represents a power of $N_{RUE_1}^{'m}$. Correspondingly, the capacity of the $RUE_1$ on the m-th resource block $RB_m$ may be calculated as follows:

$$C_{RUE_1}^{'m} = W \log_2(1 + SINR_{RUE_1}^{m}) \qquad (11)$$

For example, the determining unit 104 may rank the candidate resource blocks according to the follows:

$$D^m = \frac{C_{RUE_1}^{'m}}{C_{CUE_k}^{m} - C_{CUE_k}^{'m}} \qquad (12)$$

Here, the denominator of the equation (12) represents the capacity difference of the $CUE_k$ as shown by the above equation (7). It may be understood that a larger $D^m$ represents a larger capacity of D2D communication on the resource block $RB_m$ and smaller interferences to the corresponding cellular user equipment. Therefore, the resource block $RB_m$ may be preferentially allocated to the D2D communication group. Similarly, if the D2D communication group requires two resource blocks, two resource blocks with the largest $D^m$ may be allocated to the D2D communication group, and so on.

In a case that there are multiple RUEs in the D2D communication group, for the D2D communication group, multiple third receiving signals and multiple fourth receiving signals may be acquired for each candidate resource block, such that the SINR of each of multiple RUEs may be obtained according to equation (10), and communication capacity of each of multiple RUEs may be obtained according to equation (11). In this case, the candidate resource blocks may be ranked based on a sum of communication capacities of the multiple RUEs or a mean value of the communication capacities.

Further, in the case of allocating resources to multiple D2D communication groups, the indicator $D^m$ shown in equation (12) may be calculated for each of the D2D communication groups, and the determining unit 104 is configured to rank, for each of the D2D communication groups, its available resource blocks according to the corresponding indicator. In a case that the same available resource block is to be allocated to two or more D2D communication groups, the resource block is preferentially allocated to a D2D communication group having the largest indicator $D^m$.

In this example, the transceiving unit may be further configured to receive the third receiving signal and the fourth receiving signal from the D2D receiving device.

Similarly, although the state that D2D communication is not performed is described first and the state that D2D communication is performed is described later, this is not limited, and measurement in the state that D2D communication is performed may be performed first, and then the measurement in the state that D2D communication is performed may be performed later.

In the above description, the operations of the first acquiring unit 101, the second acquiring unit 102, the calculating unit 103, the determining unit 104, and the control unit 105 are performed for each of the candidate resource blocks. In other examples, the candidate resource blocks may be determined by pre-selection to further improve the efficiency of resource allocation. For example, a resource block of a CUE that may produce less multiplexing interferences to D2D communication may be determined as a candidate resource block by pre-selection.

For example, the determining unit 104 may determine the candidate resource block in the following way: calculating a difference between downlink transmitting power of each cellular user equipment in a cell and downlink transmitting power of the D2D emitting device; and determining a resource block corresponding to a cellular user equipment for which the difference is larger than a predetermined threshold as the candidate resource block for the D2D communication.

Specifically, for each D2D communication group, downlink transmitting power of the cellular user equipment is compared with the downlink transmitting power of the D2D emitting device. If a difference between the two downlink transmitting powers is greater than a predetermined threshold, it means that a location of the cellular user equipment may be far apart from a location of the D2D receiving device, so that multiplexing interferences caused when the D2D communication group multiplexes the resource block of the cellular user equipment would be small. Therefore, the resource block corresponding to the cellular user equipment may be determined as the candidate resource block for D2D communication. Note that the difference between the downlink transmitting power of the cellular user equipment and the downlink transmitting power of the D2D emitting device described herein may refer to an absolute value of a difference obtained by performing subtraction therebetween.

In this way, the candidate resource block is determined for each D2D communication group. It should be understood that for different D2D communication groups, the determined cellular user equipment that meet the above condition may be different, and therefore, the candidate resource blocks may also be different. A candidate resource block determined for one D2D communication group is referred to as a resource link table of the D2D communication group hereinafter.

Taking the scenario shown in Figure 4 as an example, the cellular user equipment for which the calculated difference between transmitting powers is less than the predetermined threshold is as shown within a dashed line circle. There are $CUE_1$ and $CUE_4$ in the circle of $RUE_1$. Compared with the $CUE_1$ and the $CUE_4$, $CUE_2$, $CUE_3$ and $CUE_5$ are farther away from the $RUE_1$. If $TUE_1$ and the $RUE_1$ perform D2D communication using resource blocks occupied by the $CUE_2$, the $CUE_3$ and the $CUE_5$, the multiplexing interferences thus caused may be smaller than the multiplexing interferences caused by multiplexing the resource blocks occupied by the $CUE_1$ and the $CUE_4$.

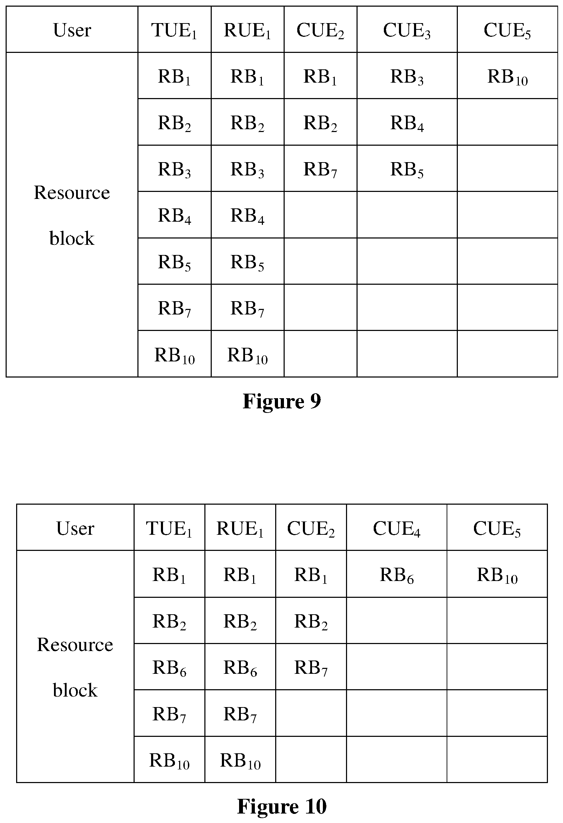

If the resource blocks occupied by the $CUE_2$, the $CUE_3$, and the $CUE_5$ are determined as candidate resource blocks, the above operations of measurement, calculation, and ranking are performed only for these candidate resource blocks. In an example, a resource link table as shown in Figures 9 and 10 may be established, where Figure 9 shows a resource link table established for the D2D communication group 1, and Figure 10 shows a resource link table established for the D2D communication group 2. According to Figure 9, the operations such as measurement are performed on the resource blocks $RB_1$, $RB_2$, and $RB_7$ occupied by the $CUE_2$, the resource blocks $RB_3$, $RB_4$, and $RB_5$ occupied by the $CUE_3$, and the resource block $RB_{10}$ occupied by the $CUE_5$. Similarly, according to Figure 10, the operations such as measurement are performed on the resource blocks $RB_1$, $RB_2$, and $RB_7$ occupied by the $CUE_2$, the resource block $RB_6$ occupied by the $CUE_4$, and the resource block $RB_{10}$ occupied by the $CUE_5$, each operation is described in detail in the above, and is not repeated herein.

It can be seen that the candidate resource block is determined by filtering the resource blocks, such that the number of resource blocks to be measured and calculated can be effectively reduced, thereby alleviating signaling and computational load, thus improving the allocation efficiency of resource blocks.

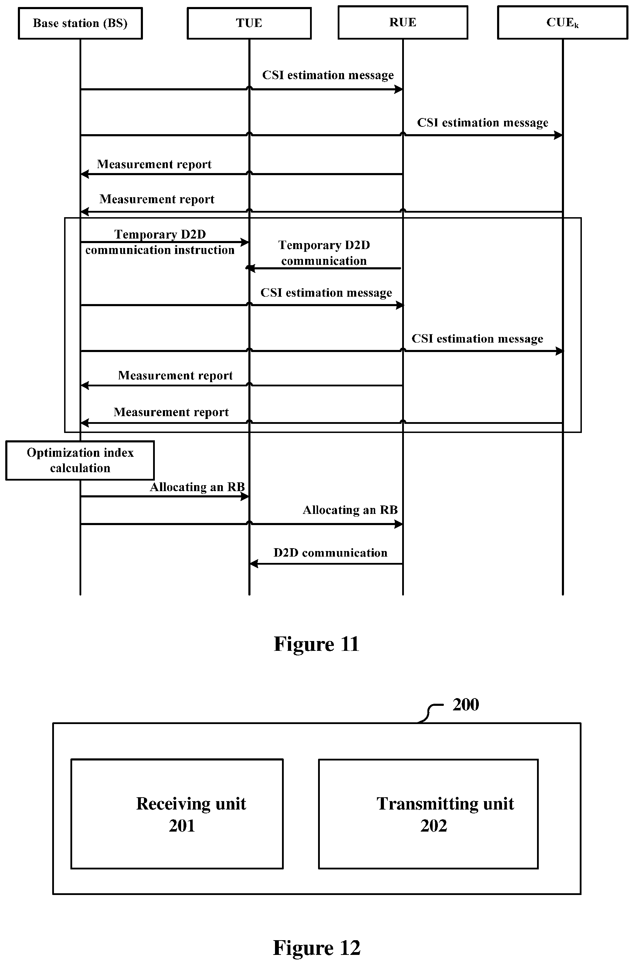

For ease of understanding, Figure 11 is a schematic diagram showing an information procedure among a BS, a cellular mobile device, and a D2D device. However, it should be understood that this information procedure is only an example and is not limitative.

First, the BS transmits a CSI estimation message to the RUE and the CUE to measure channel status information. The CSI estimation message includes a pilot symbol transmitted at a pilot location on a candidate resource block, and the RUE and the CUE measure the pilot symbol on the corresponding candidate resource block, and report the measurement result, for example, the first receiving signal and the second receiving signal, to the BS.

Subsequently, the BS transmits a temporary D2D communication instruction to the TUE to instruct the D2D communication group to perform temporary D2D communication. For example, the temporary D2D communication is that the TUE transmits the pilot symbol on the corresponding candidate resource block to the RUE. In this case, the BS transmits the CSI estimation message to the RUE and the CUE again, and the RUE and the CUE measure the received signal again in the presence of the temporary D2D communication and report the measurement result to the BS.

After receiving the measurement result, the BS calculates an optimization indicator in combination with the measurement result obtained when the temporary D2D communication is not performed. For example, the BS calculates the capacity difference of the CUE, the communication capacity of the D2D communication group for performing D2D communication, and the like.

The BS ranks the candidate resource blocks based on the calculated optimization indicator, and preferentially allocates a resource block ranked foremost for D2D. In this way, the allocation optimization of the available resource blocks to D2D communication can be realized, the interferences to the cellular user equipment can be reduced, and/or the D2D communication capacity can be improved, thereby improving the system performance. Furthermore, the information procedure of Figure 11 may also be modified such that the measurement in the state that the temporary D2D communication is performed can be performed first, that is, the process within the rectangular block of Figure 11 may be performed before the first "CSI estimation message".

Although not shown in Figure 11, a process of establishing a resource link table may be performed before the information procedure, so that the procedure shown in Figure 11 is performed only for the candidate resource blocks in the resource link table, thereby further improving the efficiency of resource block allocation for D2D communication.

In summary, an electronic apparatus is provided in the present embodiment. With this electronic apparatus, interferences of D2D communication to the cellular user equipment may be acquired by determining a difference between a receiving signal of the cellular user equipment with respect to a pilot symbol in the state that D2D communication is not performed and a receiving signal of the cellular user equipment with respect to the pilot symbol in the state that D2D communication is performed, such that the resource allocation for D2D communication can be optimized based on the interferences, thereby improving utilization efficiency of transmission resources. In addition, the electronic apparatus may also obtain the communication capacity of the D2D device by using the difference between the receiving signal of the D2D receiving device in the state that the D2D communication is not performed and the receiving signal of the D2D receiving device in the state that the D2D communication is performed, such that the resource allocation for D2D communication may be optimized based on the communication capacity and the above mentioned interferences, thereby improving the utilization efficiency of transmission resources.

<Second Embodiment

Figure 12 is a block diagram showing functional modules of an electronic apparatus 200 for wireless communications according to another embodiment of the present disclosure. The electronic apparatus 200 includes a receiving unit 201 and a transmitting unit 202. The receiving unit 201 is configured to receive an instruction to perform temporary D2D communication from a base station. The transmitting unit 202 is configured to transmit a pilot symbol on the candidate resource block.

For example, the receiving unit 201 and the transmitting unit 202 may be implemented by an antenna and related circuit elements, which may be implemented, for example, as a chip. The electronic apparatus 200 may be located at a side of a terminal device or communicatively connected to the terminal device, but the present disclosure is not limited thereto. The electronic apparatus 200 may be located at a side of any communication device that may perform D2D communication or communicatively connected to such a communication device.

The instruction to perform temporary D2D communication includes, for example, instructing the D2D device to transmit a pilot symbol on a corresponding pilot location of the candidate resource block. The pilot location is as shown in Figure 5, for example.

In an example, the transmitting unit 202 is configured to transmit the pilot symbol on the candidate resource block in a manner of multiplexing with a transmitting unit of other electronic apparatus. The multiplexing manner is as shown in Figure 8, for example.

The electronic apparatus 200 according to the present embodiment can perform temporary D2D communication to transmit the pilot symbol on the candidate resource block.

<Third Embodiment

In the process of describing the electronic apparatus for wireless communications in the embodiments described above, obviously, some processing and methods are also disclosed. Hereinafter, an overview of the methods is given without repeating some details disclosed above. However, it should be noted that, although the methods are disclosed in a process of describing the electronic apparatus for wireless communications, the methods do not certainly employ or are not certainly executed by the aforementioned components. For example, the embodiments of the electronic apparatus for wireless communications may be partially or completely implemented with hardware and/or firmware, the method described below may be executed by a computer-executable program completely, although the hardware and/or firmware of the electronic apparatus for wireless communications can also be used in the methods.

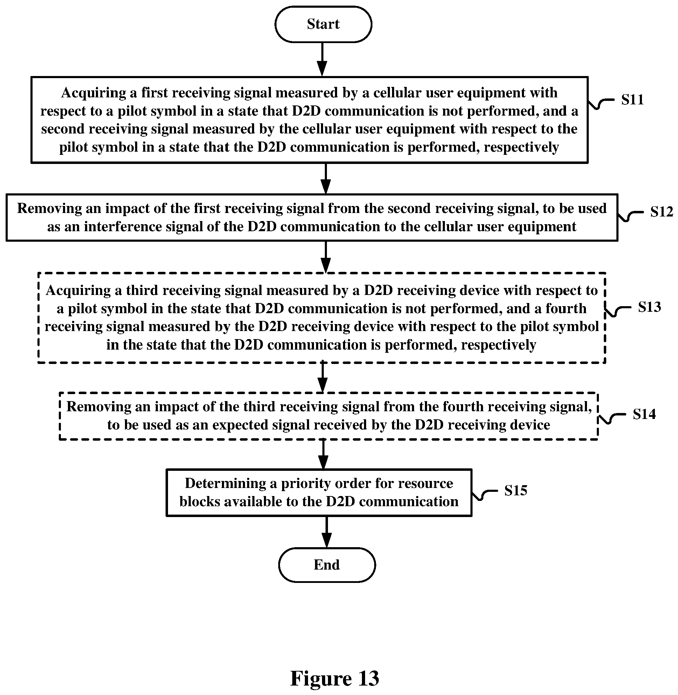

Figure 13 is a flowchart showing a method for wireless communications according to an embodiment of the present disclosure. As shown in Figure 13, the method includes: for each candidate resource block, acquiring a first receiving signal measured by a respective cellular user equipment with respect to a pilot symbol transmitted by a base station on the candidate resource block in a state that a D2D communication group does not perform D2D communication, and a second receiving signal measured by the respective cellular user equipment with respect to the pilot symbol in a state that the D2D communication group performs D2D communication, respectively (S11); removing an impact of the first receiving signal from the second receiving signal, to be used as an interference signal received by the cellular user equipment from a D2D emitting device in the D2D communication group (S12); and determining a priority order for resource blocks available to the D2D communication group by taking minimization of the interferences as an optimization objective (S15).

For example, in step S15, the interferences may be represented by a difference between the communication capacity of the cellular user equipment in the state that the D2D communication group does not perform D2D communication and the communication capacity of the cellular user equipment in the state that the D2D communication group performs D2D communication. In an example, the communication capacity of the cellular user equipment in the state that the D2D communication group does not perform D2D communication is calculated based on a signal to noise ratio of the cellular user equipment on the corresponding candidate resource block, and the communication capacity of the cellular user equipment in the state that the D2D communication group performs D2D communication is calculated based on a signal to interference and noise ratio of the cellular user equipment on the corresponding candidate resource block.

In step S11, the state that the D2D communication is performed may be a state that temporary D2D communication is performed. This may be implemented by controlling the base station to transmit temporary D2D communication signaling, to instruct the D2D emitting device to transmit the pilot symbol at a corresponding pilot location on the candidate resource block. In an example, instructing the D2D emitting device to transmit the pilot symbol at the corresponding pilot location on the candidate resource block may include: instructing multiple D2D emitting devices to transmit the pilot symbol on the candidate resource block in a multiplexing manner.

In addition, as shown by the dashed line block in Figure 13, the above method may further include the following steps: for each candidate resource block, acquiring a third receiving signal measured by a D2D receiving device of the D2D communication group with respect to a pilot symbol transmitted by the base station on the candidate resource block in the state that the D2D communication group does not perform D2D communication, and a fourth receiving signal measured by the D2D receiving device with respect to the pilot symbol in the state that the D2D communication group performs D2D communication, respectively (S13); and removing an impact of the third receiving signal from the fourth receiving signal, to be used as an expected signal received by the D2D receiving device from the D2D emitting device (S14). While determining the priority order for the resource blocks available to the D2D communication group by taking minimization of the interferences as the optimization objective in step S15, maximization of communication capacity of the D2D communication group is also considered.

For example, the communication capacity of the D2D communication group may be calculated based on a signal to interference and noise ratio of the D2D receiving device on the corresponding candidate resource block.

The above method is performed for each candidate resource block, and in some examples, the candidate resource block is determined by pre-selection. For example, the candidate resource block may be determined in the following way: calculating a difference between downlink transmitting power of each cellular user equipment in a cell and downlink transmitting power of the D2D emitting device; and determining a resource block corresponding to a cellular user equipment for which the difference is larger than a predetermined threshold as a candidate resource block for D2D communication.

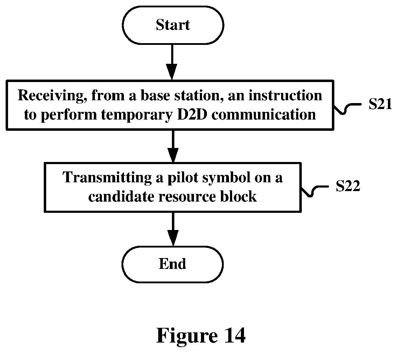

Figure 14 is a flowchart showing a method for wireless communications according to another embodiment of the present disclosure. The method includes: receiving, from a base station, an instruction to perform temporary D2D communication (S21); and transmitting a pilot symbol on a candidate resource block (S22).

For example, in step S22, the pilot symbol may be transmitted on the candidate resource block in a manner of multiplexing with other electronic apparatus.

It should be noted that the above methods may be used in combination with each other or separately, and the details thereof have been described in detail in the first to second embodiments, which are not repeated herein.

The technology of the present disclosure is applicable to various products. For example, the electronic apparatus 100 may be applied at a side of a base station, and the electronic apparatus 200 may be applied at a side of a terminal device. The base station may be realized as any type of evolved Node B (eNB) such as a macro eNB and a small eNB. The small eNB such as a pico eNB, micro eNB and a home (femto-cell) eNB may have a smaller coverage range than a macro cell. Alternatively, the base station may also be implemented as any other type of base stations, such as a NodeB and a base transceiver station (BTS). The base station may include a body (also referred to as a base station device) configured to control wireless communications; and one or more remote radio heads (RRHs) arranged in a different position from the body. In addition, various types of user equipments may each operate as the base station by temporarily or semi-persistently executing a base station function.

For example, the terminal device may be realized as a mobile terminal (such as a smartphone, a tablet personal computer (PC), a notebook PC, a portable game terminal, a portable/dongle type mobile router, and a digital camera), or an in-vehicle terminal (such as a car navigation device). The terminal device may also be realized as a terminal (which is also referred to as a machine type communication (MTC) terminal) that performs machine-to-machine (M2M) communication. Furthermore, the terminal device may be a wireless communication module (such as an integrated circuit module including a single die) mounted on each of the terminals.

Application examples of the base station and the terminal device are described hereinafter, however, it should be understood that these application examples are non-restrictive.

[Application examples regarding the base station]

(First application example)

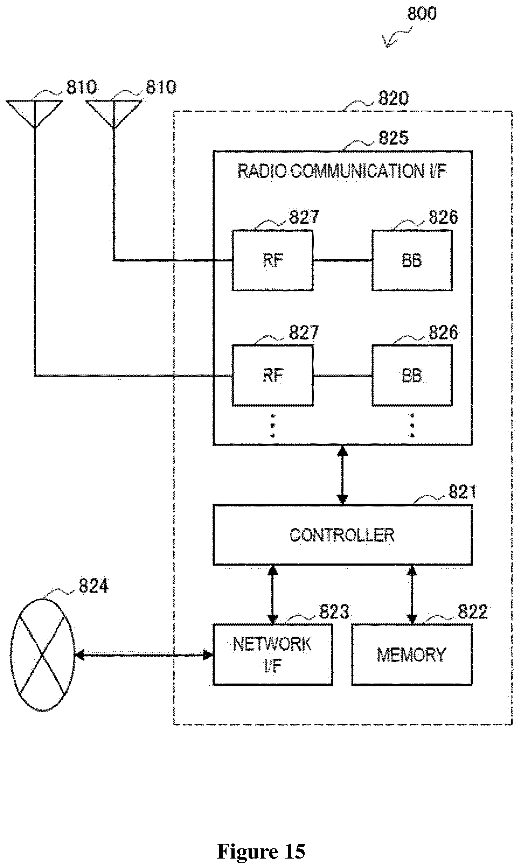

Figure 15 is a block diagram illustrating a first example of a schematic configuration of an eNB to which the technology of the present disclosure may be applied. An eNB 800 includes one or more antennas 810 and a base station apparatus 820. The base station apparatus 820 and each of the antennas 810 may be connected to each other via a radio frequency (RF) cable. Each of the antennas 810 includes a single or multiple antenna elements (such as multiple antenna elements included in a multiple-input multiple-output (MIMO) antenna), and is used for the base station apparatus 820 to transmit and receive wireless signals. As shown in Figure 15, the eNB 800 may include the multiple antennas 810. For example, the multiple antennas 810 may be compatible with multiple frequency bands used by the eNB 800. Although Figure 15 shows the example in which the eNB 800 includes the multiple antennas 810, the eNB 800 may also include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control and scheduling. The control may be performed in corporation with an eNB or a core network node in the vicinity. The memory 822 includes a RAM and a ROM, and stores a program executed by the controller 821 and various types of control data (such as terminal list, transmission power data and scheduling data).

The network interface 823 is a communication interface for connecting the base station apparatus 820 to a core network 824. The controller 821 may communicate with a core network node or another eNB via the network interface 823. In this case, the eNB 800, and the core network node or another eNB may be connected to each other via a logic interface (such as an S1 interface and an X2 interface). The network interface 823 may also be a wired communication interface or a wireless communication interface for wireless backhaul. If the network interface 823 is a wireless communication interface, the network interface 823 may use a higher frequency band for wireless communication than that used by the radio communication interface 825.

The radio communication interface 825 supports any cellular communication scheme (such as Long Term Evolution (LTE) and LTE-advanced), and provides wireless connection to a terminal located in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as L1, Media Access Control (MAC), Radio Link Control (RLC), and a Packet Data Convergence Protocol (PDCP)). The BB processor 826 may have a part or all of the above-described logical functions instead of the controller 821. The BB processor 826 may be a memory storing communication control programs, or a module including a processor and a related circuit configured to execute the programs. Updating the program may allow the functions of the BB processor 826 to be changed. The module may be a card or a blade that is inserted into a slot of the base station apparatus 820. Alternatively, the module may also be a chip that is mounted on the card or the blade. Meanwhile, the RF circuit 827 may include, for example, a mixer, a filter, and an amplifier, and transmits and receives wireless signals via the antenna 810.

As show in Figure 15, the radio communication interface 825 may include the multiple BB processors 826. For example, the multiple BB processors 826 may be compatible with multiple frequency bands used by the eNB 800. The radio communication interface 825 may include multiple RF circuits 827, as shown in Figure 15. For example, the multiple RF circuits 827 may be compatible with multiple antenna elements. Although Figure 15 shows the example in which the radio communication interface 825 includes the multiple BB processors 826 and the multiple RF circuits 827, the radio communication interface 825 may also include a single BB processor 826 or a single RF circuit 827.

(Second application example)

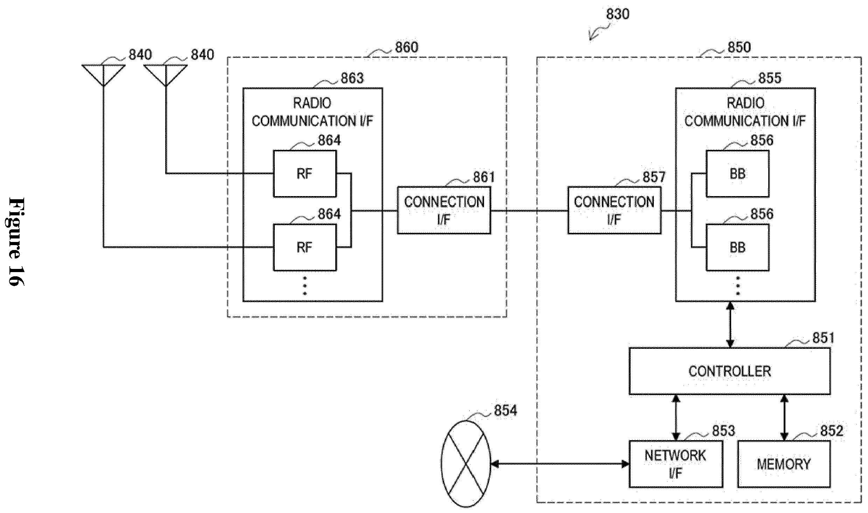

Figure 16 is a block diagram illustrating a second example of a schematic configuration of an eNB to which the technology of the present disclosure may be applied. An eNB 830 includes one or more antennas 840, a base station apparatus 850, and an RRH 860. The RRH 860 and each of the antennas 840 may be connected to each other via an RF cable. The base station apparatus 850 and the RRH 860 may be connected to each other via a high speed line such as an optical fiber cable.

Each of the antennas 840 includes a single or multiple antennal elements (such as multiple antenna elements included in an MIMO antenna), and is used for the RRH 860 to transmit and receive wireless signals. As shown in Figure 16, the eNB 830 may include the multiple antennas 840. For example, the multiple antennas 840 may be compatible with multiple frequency bands used by the eNB 830. Although Figure 16 shows the example in which the eNB 830 includes the multiple antennas 840, the eNB 830 may also include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 15.

The radio communication interface 855 supports any cellular communication scheme (such as LTE and LTE-advanced), and provides wireless communication to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 15, except that the BB processor 856 is connected to an RF circuit 864 of the RRH 860 via the connection interface 857. As show in Figure 16, the radio communication interface 855 may include the multiple BB processors 856. For example, the multiple BB processors 856 may be compatible with multiple frequency bands used by the eNB 830. Although Figure 16 shows the example in which the radio communication interface 855 includes the multiple BB processors 856, the radio communication interface 855 may also include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives wireless signals via the antenna 840. The radio communication interface 863 may typically include, for example, the RF circuit 864. The RF circuit 864 may include, for example, a mixer, a filter and an amplifier, and transmits and receives wireless signals via the antenna 840. The radio communication interface 863 may include multiple RF circuits 864, as shown in Figure 16. For example, the multiple RF circuits 864 may support multiple antenna elements. Although Figure 16 shows the example in which the radio communication interface 863 includes the multiple RF circuits 864, the radio communication interface 863 may also include a single RF circuit 864.

In the eNB 800 shown in Figure 15 and the eNB 830 shown in Figure 16, the functions of the transceiver unit described in the first embodiment may be implemented by the radio communication interface 825 and the radio communication interface 855 and/or the radio communication interface 863. At least a part of the functions may be implemented by a controller 821 and a controller 851. The first acquiring unit 101, the second acquiring unit 102, the calculating unit 103, the determining unit 104 and the control unit 105 described with reference to Figures 6 and 7 may be implemented by the controller 821 and the controller 851. For example, the controller 821 and the controller 851 may rank the candidate resource blocks by performing the functions of the first acquiring unit 101, the second acquiring unit 102, the calculating unit 103, and the determining unit 104, and control the base station to transmit the Temporary D2D communication instruction by performing the function of the control unit 105.

[Application example regarding the terminal device]

(First Application Example)

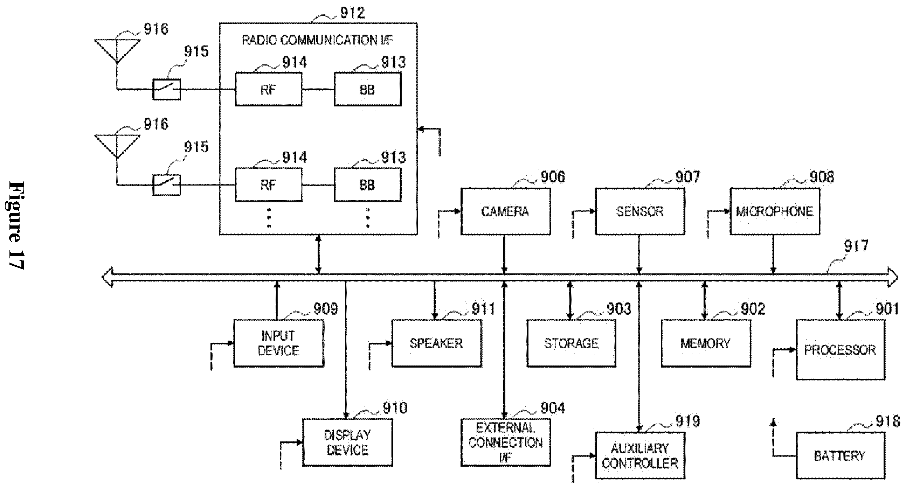

Figure 17 is a block diagram illustrating an example of a schematic configuration of a smartphone 900 to which the technology of the present disclosure may be applied. The smart phone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smart phone 900. The memory 902 includes a RAM and a ROM, and stores a program executed by the processor 901 and data. The storage 903 may include a storage medium such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyro sensor, a geomagnetism sensor, and an acceleration sensor. The microphone 908 converts sounds that are inputted to the smart phone 900 to audio signals. The input device 909 includes, for example, a touch sensor configured to detect touch onto a screen of the display device 910, a keypad, a keyboard, a button, or a switch, and receives an operation or an information inputted from a user. The display device 910 includes a screen (such as a liquid crystal display (LCD) and an organic light-emitting diode (OLED) display), and displays an output image of the smart phone 900. The speaker 911 converts audio signals that are outputted from the smart phone 900 to sounds.

The radio communication interface 912 supports any cellular communication scheme (such as LTE and LTE-advanced), and performs a wireless communication. The radio communication interface 912 may include, for example, a BB processor 913 and an RF circuit 914. The BB processor 913 may perform, for example, encoding/decoding, modulating/demodulating, and multiplexing/de-multiplexing, and perform various types of signal processing for wireless communication. The RF circuit 914 may include, for example, a mixer, a filter and an amplifier, and transmits and receives wireless signals via the antenna 916. It should be noted that although Figure 17 shows a case where one RF link is connected to one antenna, which is only illustrative and a case where one RF link is connected to multiple antennas through multiple phase shifters may exist. The radio communication interface 912 may be a chip module having the BB processor 913 and the RF circuit 914 integrated thereon. The radio communication interface 912 may include multiple BB processors 913 and multiple RF circuits 914, as shown in Figure 17. Although Figure 17 shows the example in which the radio communication interface 912 includes the multiple BB processors 913 and the multiple RF circuits 914, the radio communication interface 912 may also include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a radio local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna) and is used for the radio communication interface 912 to transmit and receive wireless signals. The smart phone 900 may include the multiple antennas 916, as shown in Figure 17. Although Figure 17 shows the example in which the smart phone 900 includes the multiple antennas 916, the smart phone 900 may also include a single antenna 916.

Furthermore, the smart phone 900 may include the antenna 916 for each wireless communication scheme. In this case, the antenna switches 915 may be omitted from the configuration of the smart phone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smart phone 900 shown in Figure 17 via feeder lines that are partially shown as dashed lines in Figure 17. The auxiliary controller 919, operates a minimum necessary function of the smart phone 900, for example, in a sleep mode.

In the smartphone 900 shown in Figure 17, the receiving unit 201 and the transmitting unit 202 described in the second embodiment may be implemented by the radio communication interface 912. At least a part of the functions of the receiving unit 201 and the transmitting unit 202 may be implemented by the processor 901 and the auxiliary controller 919.

(Second application example)

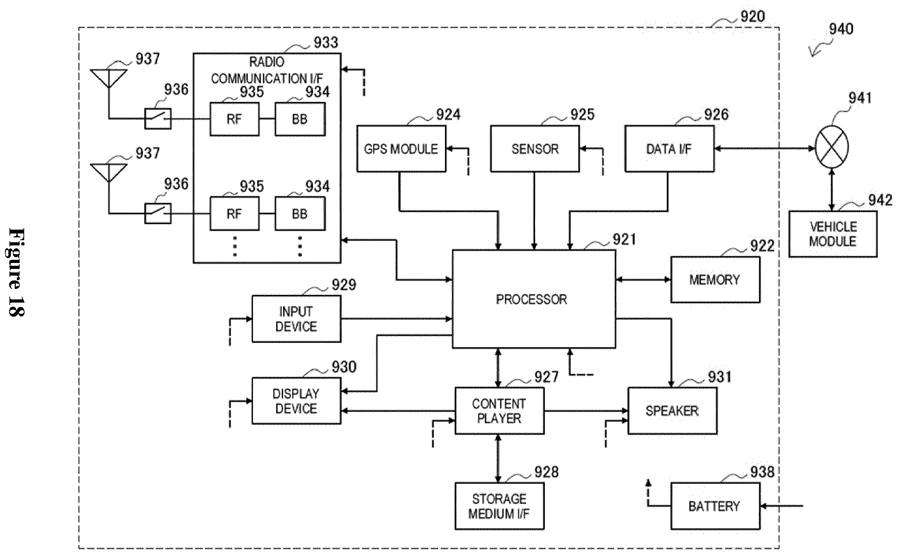

Figure 18 is a block diagram illustrating an example of a schematic configuration of a car navigation apparatus 920 to which the technology of the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example a CPU or a SoC, and controls a navigation function and additional function of the car navigation apparatus 920. The memory 922 includes RAM and ROM, and stores a program that is executed by the processor 921, and data.

The GPS module 924 determines a position (such as latitude, longitude and altitude) of the car navigation apparatus 920 by using GPS signals received from a GPS satellite. The sensor 925 may include a group of sensors such as a gyro sensor, a geomagnetic sensor and an air pressure sensor. The data interface 926 is connected to, for example, an in-vehicle network 941 via a terminal that is not shown, and acquires data (such as vehicle speed data) generated by the vehicle.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or information inputted from a user. The display device 930 includes a screen such as an LCD or OLED display, and displays an image of the navigation function or content that is reproduced. The speaker 931 outputs a sounds for the navigation function or the content that is reproduced.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating and multiplexing/demultiplexing, and perform various types of signal processing for wireless communication. The RF circuit 935 may include, for example, a mixer, a filter and an amplifier, and transmits and receives wireless signals via the antenna 937. The radio communication interface 933 may also be a chip module having the BB processor 934 and the RF circuit 935 integrated thereon. The radio communication interface 933 may include multiple BB processors 934 and multiple RF circuits 935, as shown in Figure 18. Although Figure 18 shows the example in which the radio communication interface 933 includes the multiple BB processors 934 and the multiple RF circuits 935, the radio communication interface 933 may also include a single BB processor 934 and a single RF circuit 935.

Furthermore, in addition to a cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used by the radio communication interface 933 to transmit and receive wireless signals. As shown in Figure 18, the car navigation apparatus 920 may include the multiple antennas 937. Although Figure 18 shows the example in which the car navigation apparatus 920 includes the multiple antennas 937, the car navigation apparatus 920 may also include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to the blocks of the car navigation apparatus 920 shown in Figure 17 via feeder lines that are partially shown as dash lines in Figure 18. The battery 938 accumulates power supplied from the vehicle.

In the car navigation device 920 shown in Figure 18, the receiving unit 201 and the transmitting unit 202 described in the second embodiment may be implemented by the radio communication interface 933. At least a part of the functions of the receiving unit 201 and the transmitting unit 202 may be implemented by the processor 921.

The technology of the present disclosure may also be implemented as an in-vehicle system (or a vehicle) 940 including one or more blocks of the car navigation apparatus 920, the in-vehicle network 941 and a vehicle module 942. The vehicle module 942 generates vehicle data (such as a vehicle speed, an engine speed, and failure information), and outputs the generated data to the in-vehicle network 941.

The basic principle of the present disclosure has been described above in conjunction with particular embodiments. However, as can be appreciated by those ordinarily skilled in the art, all or any of the steps or components of the method and apparatus according to the disclosure can be implemented with hardware, firmware, software or a combination thereof in any computing device (including a processor, a storage medium, etc.) or a network of computing devices by those ordinarily skilled in the art in light of the disclosure of the disclosure and making use of their general circuit designing knowledge or general programming skills.

Moreover, the present disclosure further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present disclosure. The memory medium includes but is not limited to soft disc, optical disc, magnetic optical disc, memory card, memory stick and the like.

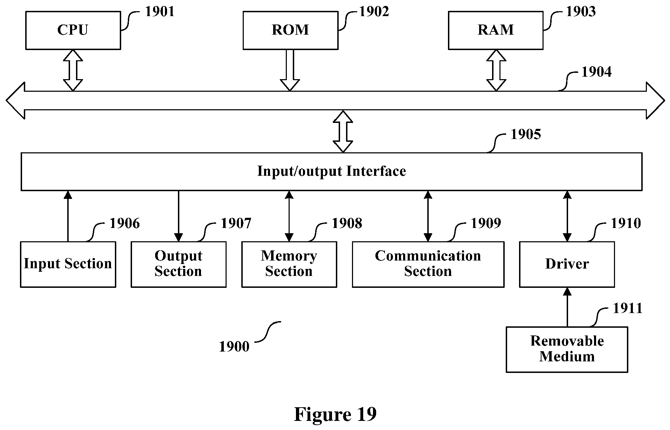

In a case of implementing the present disclosure in software or firmware, the program consisting of the software is installed to a computer with a dedicated hardware structure (such as a general purpose computer 1900 shown in Figure 19) from the storage medium or network. The computer, when being installed with the various programs, performs various functions.

In Figure 19, a central processing unit (CPU) 1901 executes various processing according to a program stored in a read-only memory (ROM) 1902 or a program loaded to a random access memory (RAM) 1903 from a memory section 1908. The data needed for the various processing of the CPU 1901 may be stored in the RAM 1903 as needed. The CPU 1901, the ROM 1902 and the RAM 1903 are linked with each other via a bus 1904. An input/output interface 1905 is also linked to the bus 1904.

The following components are linked to the input/output interface 1905: an input section 1906 (including keyboard, mouse and the like), an output section 1907 (including displays such as a cathode ray tube (CRT), a liquid crystal display (LCD), a loudspeaker and the like), a memory section 1908 (including hard disc and the like), and a communication section 1909 (including a network interface card such as a LAN card, modem and the like). The communication section 1909 performs communication processing via a network such as the Internet. A driver 1910 may also be linked to the input/output interface 1905, if needed. If needed, a removable medium 1911, for example, a magnetic disc, an optical disc, a magnetic optical disc, a semiconductor memory and the like, may be installed in the driver 1910, so that the computer program read therefrom is installed in the memory section 1908 as appropriate.

In the case where the foregoing series of processing is achieved through software, programs forming the software are installed from a network such as the Internet or a memory medium such as the removable medium 1911.

It should be appreciated by those skilled in the art that the memory medium is not limited to the removable medium 1911 shown in Figure 19, which has program stored therein and is distributed separately from the apparatus so as to provide the programs to users. The removable medium 1911 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 1902 and the memory section 1908 in which programs are stored, and can be distributed to users along with the device in which they are incorporated.

To be further noted, in the apparatus, method and system according to the present disclosure, the respective components or steps can be decomposed and/or recombined. These decompositions and/or recombinations shall be regarded as equivalent solutions of the disclosure. Moreover, the above series of processing steps can naturally be performed temporaryly in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ......" in which an element is defined will not preclude presence of an additional identical element(s) in a process, method, article or device comprising the defined element(s)" unless further defined.

Although the embodiments of the present disclosure have been described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

**Claims**

1. An electronic apparatus for wireless communications, comprising:

   processing circuitry, configured to: for each candidate resource block,
   acquire a first receiving signal measured by a respective cellular user equipment with respect to a pilot symbol transmitted by a base station on the candidate resource block in a state that a D2D communication group does not perform D2D communication, and a second receiving signal measured by the respective cellular user equipment with respect to the pilot symbol in a state that the D2D communication group performs D2D communication, respectively;
   remove an impact of the first receiving signal from the second receiving signal, to be used as an interference signal received by the cellular user equipment from a D2D emitting device of the D2D communication group; and
   determine a priority order for resource blocks available to the D2D communication group by taking minimization of the interferences as an optimization objective.

2. The electronic apparatus according to claim 1, wherein the processing circuitry is further configured to: for each candidate resource block,
   acquire a third receiving signal measured by a D2D receiving device of the D2D communication group with respect to a pilot symbol transmitted by the base station on the candidate resource block in the state that the D2D communication group does not perform D2D communication, and a fourth receiving signal measured by the D2D receiving device with respect to the pilot symbol in the state that the D2D communication group performs D2D communication, respectively; and
   remove an impact of the third receiving signal from the fourth receiving signal, to be used as an expected signal received by the D2D receiving device from the D2D emitting device,
   wherein, while determining the priority order for the resource blocks available to the D2D communication group by taking minimization of the interferences as the optimization objective, maximization of communication capacity of the D2D communication group is also considered.

3. The electronic apparatus according to claim 1, wherein determining the priority order for the resource blocks available to the D2D communication group by taking minimization of the interferences as the optimization objective comprises:
   representing the interferences with a difference between the communication capacity of the cellular user equipment in the state that the D2D communication group does not perform D2D communication and the communication capacity of the cellular user equipment in the state that the D2D communication group performs D2D communication.

4. The electronic apparatus according to claim 3, wherein the communication capacity of the cellular user equipment in the state that the D2D communication group does not perform D2D communication is calculated based on a signal to noise ratio of the cellular user equipment on the corresponding candidate resource block; and the communication capacity of the cellular user equipment in the state that the D2D communication group performs D2D communication is calculate based on a signal to interference and noise ratio of the cellular user equipment on the corresponding candidate resource block.

5. The electronic apparatus according to claim 1, where the state that the D2D communication is performed is a state that Temporary D2D communication is performed.

6. The electronic apparatus according to claim 5, wherein the processing circuitry is configured to:
   control the base station to transmit Temporary D2D communication signaling, to instruct the D2D emitting device to transmit the pilot symbol on a corresponding pilot location of the candidate resource block.

7. The electronic apparatus according to claim 6, wherein, instructing the D2D emitting device to transmit the pilot symbol on the corresponding pilot location of the candidate resource block comprises: instructing a plurality of D2D emitting devices to transmit the pilot symbol on the candidate resource block in a multiplexing manner.

8. The electronic apparatus according to claim 2, wherein the communication capacity of the D2D communication group is calculated based on a signal to interference and noise ratio of the D2D receiving device on the corresponding candidate resource block.

9. The electronic apparatus according to claim 2, wherein the candidate resource blocks are determined by preselection.

10. The electronic apparatus according to claim 9, wherein the processing circuitry is further configured to determine the candidate resource blocks by the following manner:

    calculating a difference between downlink transmitting power of each cellular user equipment in a cell and downlink transmitting power of the D2D emitting device; and
    determining a resource block corresponding to the cellular user equipment for which the difference is larger than a predetermined threshold as the candidate resource block for the D2D communication.

11. An electronic apparatus for wireless communications, comprising:

    a receiving unit, configured to receive, from a base station, an instruction to perform temporary D2D communication; and
    a transmitting unit, configured to transmit a pilot symbol on a candidate resource block.

12. The electronic apparatus according to claim 11, wherein, the pilot symbol is transmitted on the candidate resource block in a manner of multiplexing with the transmitting unit of other electronic apparatus.

13. A method for wireless communications, comprising: for each candidate resource block,
    acquiring a first receiving signal measured by a respective cellular user equipment with respect to a pilot symbol transmitted by a base station on the candidate resource block in a state that a D2D communication group does not perform D2D communication, and a second receiving signal measured by the respective cellular user equipment with respect to the pilot symbol in a state that the D2D communication group performs D2D communication, respectively;
    removing an impact of the first receiving signal from among the second receiving signal, to be used as an interference signal received by the cellular user equipment from a D2D emitting device of the D2D communication group; and
    determining a priority order for resource blocks available to the D2D communication group by taking minimization of the interferences as an optimization objective.

14. The method according to claim 13, wherein determining the a priority order for the resource blocks available to the D2D communication group by taking minimization of the interferences as the optimization objective comprises:

representing the interferences with a difference between the communication capacity of the cellular user equipment in the state that the D2D communication group does not perform D2D communication and the communication capacity of the cellular user equipment in the state that the D2D communication group performs D2D communication.

15. The method according to claim 13, wherein, for each candidate resource block,
acquiring a third receiving signal measured by a D2D receiving device of the D2D communication group with respect to a pilot symbol transmitted by the base station on the candidate resource block in the state that the D2D communication group does not perform D2D communication, and a fourth receiving signal measured by the D2D receiving device with respect to the pilot symbol in the state that the D2D communication group performs D2D communication, respectively; and
removing an impact of the third receiving signal from the fourth receiving signal, to be used as an expected signal received by the D2D receiving device from the D2D emitting device,
wherein, while determining the a priority order for the resource blocks available to the D2D communication group by taking minimization of the interferences as the optimization objective, maximization of communication capacity of the D2D communication group is also considered.

16. The method according to any one of claims 13 to 15, wherein, the candidate resource blocks are determined in the following manner:

calculating a difference between downlink transmitting power of each cellular user equipment in a cell and downlink transmitting power of the D2D emitting device; and
determining a resource block corresponding to the cellular user equipment for which the difference is larger than a predetermined threshold as the candidate resource block for the D2D communication.

17. A method for wireless communications, comprising:

receiving, from a base station, an instruction to perform temporary D2D communication; and
transmitting a pilot symbol on a candidate resource block.

18. The method according to claim 17, wherein, the pilot symbol is transmitted on the candidate resource block in a manner of multiplexing with other electronic apparatus.

| | Multiplexed | | | Dedicated | | |
|---|---|---|---|---|---|---|
| **In band** | D2D communication | | D2D communication | | | D2D communication |
| | Cellular communication | | | Cellular communication | | |
| | Cellular spectrum | | | Cellular spectrum | | |
| **Out band** | Cellular communication | | D2D communication | | | |
| | Cellular spectrum | | ISM spectrum | | | |

**Figure 1**

**Figure 2**

**Figure 3**

**Figure 4**

**Resource block (RB)**

**Figure 5**

**Figure 6**

**Figure 7**

**Figure 8**

| User | TUE$_1$ | RUE$_1$ | CUE$_2$ | CUE$_3$ | CUE$_5$ |
|---|---|---|---|---|---|
| Resource block | RB$_1$ | RB$_1$ | RB$_1$ | RB$_3$ | RB$_{10}$ |
| | RB$_2$ | RB$_2$ | RB$_2$ | RB$_4$ | |
| | RB$_3$ | RB$_3$ | RB$_7$ | RB$_5$ | |
| | RB$_4$ | RB$_4$ | | | |
| | RB$_5$ | RB$_5$ | | | |
| | RB$_7$ | RB$_7$ | | | |
| | RB$_{10}$ | RB$_{10}$ | | | |

**Figure 9**

| User | TUE$_1$ | RUE$_1$ | CUE$_2$ | CUE$_4$ | CUE$_5$ |
|---|---|---|---|---|---|
| Resource block | RB$_1$ | RB$_1$ | RB$_1$ | RB$_6$ | RB$_{10}$ |
| | RB$_2$ | RB$_2$ | RB$_2$ | | |
| | RB$_6$ | RB$_6$ | RB$_7$ | | |
| | RB$_7$ | RB$_7$ | | | |
| | RB$_{10}$ | RB$_{10}$ | | | |

**Figure 10**

**Figure 11**

**Figure 12**

Start

Acquiring a first receiving signal measured by a cellular user equipment with respect to a pilot symbol in a state that D2D communication is not performed, and a second receiving signal measured by the cellular user equipment with respect to the pilot symbol in a state that the D2D communication is performed, respectively — S11

Removing an impact of the first receiving signal from the second receiving signal, to be used as an interference signal of the D2D communication to the cellular user equipment — S12

Acquiring a third receiving signal measured by a D2D receiving device with respect to a pilot symbol in the state that D2D communication is not performed, and a fourth receiving signal measured by the D2D receiving device with respect to the pilot symbol in the state that the D2D communication is performed, respectively — S13

Removing an impact of the third receiving signal from the fourth receiving signal, to be used as an expected signal received by the D2D receiving device — S14

Determining a priority order for resource blocks available to the D2D communication — S15

End

**Figure 13**

Start

Receiving, from a base station, an instruction
to perform temporary D2D communication — S21

Transmitting a pilot symbol on a
candidate resource block — S22

End

**Figure 14**

800

810   810

820

825

RADIO COMMUNICATION I/F

827                826

RF          BB

827                826

RF          BB

821

CONTROLLER

824

823                822

NETWORK I/F          MEMORY

**Figure 15**

**Figure 16**

**Figure 17**

Figure 18

CPU 1901

ROM 1902

RAM 1903

1904

Input/output Interface 1905

Input Section 1906

Output Section 1907

Memory Section 1908

Communication Section 1909

Driver 1910

Removable Medium 1911

1900

Figure 19

## INTERNATIONAL SEARCH REPORT

| | International application No. |
|---|---|
| | **PCT/CN2018/092540** |

| **A. CLASSIFICATION OF SUBJECT MATTER** |
|---|
| H04B 1/7097(2011.01)i; H04L 27/00(2006.01)i; H04J 11/00(2006.01)i; H04W 72/00(2009.01)i |
| According to International Patent Classification (IPC) or to both national classification and IPC |

| **B. FIELDS SEARCHED** |
|---|
| Minimum documentation searched (classification system followed by classification symbols) |
| H04B; H04Q; H04W; H04L; H04J |
| Documentation searched other than minimum documentation to the extent that such documents are included in the fields searched |
| |
| Electronic data base consulted during the international search (name of data base and, where practicable, search terms used) |
| CNTXT, CNABS, VEN, WOTXT, USTXT, CNKI, 3GPP: D2D, 通信, 候选, 资源块, 导频, 符号, 干扰, 减小, 最小, 小, 低, 优先级, 优先, 顺序, device, to, resource, block?, RB?, transmit+, pilot?, symbol?, priority, order, low, depress, interference, minimum, lowest, minimal, candidate |

| **C. DOCUMENTS CONSIDERED TO BE RELEVANT** | | |
|---|---|---|
| Category* | Citation of document, with indication, where appropriate, of the relevant passages | Relevant to claim No. |
| PA | WO 2018045490 A1 (HUAWEI TECHNOLOGIES CO., LTD.) 15 March 2018 (2018-03-15) entire document | 1-18 |
| PA | CN 107371261 A (ZTE CORPORATION) 21 November 2017 (2017-11-21) entire document | 1-18 |
| X | US 2011019635 A1 (PARK, S.H. ET AL.) 27 January 2011 (2011-01-27) abstract, and claims 1-20 | 11, 12, 17, 18 |
| A | CN 101924575 A (DATANG MOBILE COMMUNICATIONS EQUIPMENT CO., LTD.) 22 December 2010 (2010-12-22) entire document | 1-18 |
| A | US 2011019635 A1 (PARK, S.H. ET AL.) 27 January 2011 (2011-01-27) abstract, and claims 1-20 | 1-10, 13-16 |
| A | CN 102413477 A (DATANG MOBILE COMMUNICATIONS EQUIPMENT CO., LTD.) 11 April 2012 (2012-04-11) abstract, and claims 1-16 | 1-18 |
| A | US 2017126348 A1 (MOTOROLA MOBILITY LLC.) 04 May 2017 (2017-05-04) entire document | 1-18 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 September 2018** | **14 September 2018** |

| Name and mailing address of the ISA/CN | Authorized officer |
|---|---|
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2018/092540**

**C.     DOCUMENTS CONSIDERED TO BE RELEVANT**

| Category* | Citation of document, with indication, where appropriate, of the relevant passages | Relevant to claim No. |
|-----------|-------------------------------------------------------------------------------------|------------------------|
| X | CN 101345568 A (DATANG MOBILE COMMUNICATIONS EQUIPMENT CO., LTD.) 14 January 2009 (2009-01-14) <br> abstract, and claims 1-10 | 11, 12, 17, 18 |

Form PCT/ISA/210 (second sheet) (January 2015)

<table>
<tr><td>**INTERNATIONAL SEARCH REPORT**</td><td>International application No.<br>**PCT/CN2018/092540**</td></tr>
</table>

**Box No. III      Observations where unity of invention is lacking (Continuation of item 3 of first sheet)**

This International Searching Authority found multiple inventions in this international application, as follows:

[1]   1) Features in claims 1 and 13: with regard to each candidate resource block, respectively acquiring a first received signal, regarding a pilot frequency signal sent by a base station on a corresponding candidate resource block, measured by a corresponding cellular UE in the state where a D2D communication group does not carry out D2D communication, and a second received signal, regarding the pilot frequency symbol, measured by the corresponding cellular UE in the state where the D2D communication group carries out D2D communication; removing the influence of the first received signal from the second received signal and taking same as an interfering signal received by the cellular UE from a D2D transmitting device of the D2D communication group; and determining the priority order of available resource blocks of the D2D communication group for the optimization objective of minimizing interference.

[2]   2) Features in claims 11 and 17: receiving, from the base station, an instruction for carrying out temporary D2D communication, and sending the pilot frequency symbol on the candidate resource block.

[3]   The above-mentioned two groups of independent claims do not have the common technical features, and therefore, do not have a technical relationship therebetween.

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**   ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

**INTERNATIONAL SEARCH REPORT**
**Information on patent family members**

International application No.

**PCT/CN2018/092540**

| Patent document cited in search report | | | Publication date (day/month/year) | Patent family member(s) | | | Publication date (day/month/year) |
|---|---|---|---|---|---|---|---|
| WO | 2018045490 | A1 | 15 March 2018 | None | | | |
| CN | 107371261 | A | 21 November 2017 | WO | 2017193972 | A1 | 16 November 2017 |
| US | 2011019635 | A1 | 27 January 2011 | KR | 20090110208 | A | 21 October 2009 |
| | | | | WO | 2009128657 | A2 | 22 October 2009 |
| | | | | WO | 2009128657 | A3 | 14 January 2010 |
| | | | | US | 8432862 | B2 | 30 April 2013 |
| CN | 101924575 | A | 22 December 2010 | CN | 101924575 | B | 14 August 2013 |
| CN | 102413477 | A | 11 April 2012 | CN | 102413477 | B | 04 June 2014 |
| | | | | WO | 2012037868 | A1 | 29 March 2012 |
| US | 2017126348 | A1 | 04 May 2017 | WO | 2017074779 | A1 | 04 May 2017 |
| | | | | WO | 2017074775 | A1 | 04 May 2017 |
| | | | | EP | 3342084 | A1 | 04 July 2018 |
| | | | | CN | 108352955 | A | 31 July 2018 |
| | | | | WO | 2017074769 | A1 | 04 May 2017 |
| CN | 101345568 | A | 14 January 2009 | CN | 101345568 | B | 25 July 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710523258